# FASCICULE DE BREVET EUROPEEN

(11) **EP 2 436 876 B1**
(45) Date de publication et mention de la délivrance du brevet: **05.07.2017**
(21) Numéro de dépôt: 11306157.6
(22) Date de dépôt: 15.09.2011
(51) Int. Cl.: F01B 17/02, F02D 25/04, F02D 41/00, F02D 13/06

(54) **Procédé de fonctionnement d'un moteur hybride thermique-pneumatique et moteur adapté**
Betriebsverfahren eines thermo-pneumatischen Hybridmotors, und angepasster Motor
Operating method of a hybrid heat-air engine and suitable engine

(30) Priorité: 15.09.2010 FR 1057375
(43) Date de publication de la demande: 04.04.2012
(73) Titulaire: Université d'Orléans, 45067 Orléans Cedex 2 (FR)
(72) Inventeur: Charlet, Alain, 45510 VIENNE EN VAL (FR); Higelin, Pascal, 45560 SAINT DENIS EN VAL (FR); Chamaillard, Yann, 45130 LE BARDON (FR); Guzzella, Lino, 8610 USTER (CH); Onder, Christopher H., 8484 WEISSLINGEN (CH); Voser, Christoph, 5430 WETTINGEN (CH); Donitz, Christian, 80937 MUNCHEN (DE)
(74) Mandataire: Chauvin, Vincent

(56) Documents cités:
- EP-A2- 2 103 777
- DE-A1- 10 221 269
- DE-A1-102007 009 161
- DE-C1- 3 631 284
- US-A1- 2009 199 789
- US-A1- 2010 012 053

## Description

La présente invention concerne un procédé de fonctionnement d'un moteur hybride thermique-pneumatique ainsi qu'un moteur adapté. Elle a des applications dans le domaine industriel notamment de l'automobile.

Les moteurs thermiques à combustion interne de mélange carburant-comburant en chambre de combustion sont connus de longue date et ont connu de nombreuses évolutions notamment pour en améliorer le rendement. Ce type de moteur met en oeuvre des cycles dans lesquels des phases de compression ou expansion de mélange/gaz de combustion ont lieu. On a proposé plus récemment d'y mettre en oeuvre une force motrice qui soit sous forme d'air comprimé et non plus sous forme de gaz de combustion de mélange. L'air comprimé peut être obtenu et stocké pendant les phases de décélération du véhicule (mode pompe pneumatique) ou pendant un mode classique (combustion/thermique) de fonctionnement du moteur (mode sous-alimenté). Du fait de la possibilité de passer d'un mode de fonctionnement classique (combustion/thermique) à un mode pneumatique les moteurs ayant cette capacité ont été appelés hybrides thermique-pneumatique. C'est ainsi que les demandes de brevets GB-2402169, DE-10221269, DE-3631284, DE-102007009161 ou EP-2013777 décrivent des modes de fonctionnement de moteurs hybrides thermiques-pneumatiques.

Si un tel moteur permet d'obtenir une certaine économie de fonctionnement puisque qu'il est possible de stocker de l'énergie sous forme d'air comprimé lorsque le moteur est sous-utilisé puis de la restituer en arrêtant l'alimentation en carburant du moteur et en passant en mode moteur pneumatique, il présente toutefois encore certaines limites. En particulier, l'optimisation du fonctionnement du moteur n'est pas encore parfaite en terme de rendement. En effet, le rendement d'un moteur qui est maximum pour une charge optimale donnée est plus faible dans les autres conditions de charge et il n'est généralement pas possible en pratique de faire fonctionner les moteurs classiques toujours à cette charge optimale car la plus part des applications des moteurs, notamment dans l'automobile, requièrent des charges très variables au cours du temps.

L'utilisation d'un moteur hybride thermique-pneumatique qui présente l'intérêt de permettre un contrôle spécifique du mode de fonctionnement de chaque cylindre va permettre d'améliorer le rendement global du moteur. En effet, dans un moteur thermique classique, chacun des cylindres participe de manière équivalente (équi-répartition du travail) à la production de couple et on a vu que le rendement d'un moteur (donc de chaque cycle thermodynamique dans chacun des cylindres) est maximum pour la charge optimale (ou proche de la charge optimale) et est plus faible dans les autres conditions de charge. Ainsi dans le cas d'une charge partielle, aucun des cycles thermodynamiques thermiques dans chacun des cylindres ne se trouve dans des conditions de meilleur rendement, chacun étant dans une condition de moindre rendement que le rendement maximum. Dans ces conditions de moindre charge, il est alors particulièrement intéressant de transférer le travail à fournir en mode thermique à seulement une partie des cylindres (voir un seul cylindre) qui pourront (pourra) alors être amenés individuellement à une condition de charge optimale. De plus, il est possible d'optimiser le rendement global du moteur en « surchargeant » un moteur dans des conditions de charge initialement insuffisante pour être optimale (charge insuffisante pour un cylindre, pour deux cylindres, trois ou plus en mode thermique selon le point théorique optimal de charge le plus proche pour le nombre de cylindres en mode thermique nécessaires) avec une activité de compression supplémentaire pour production de gaz comprimé qui pourra être utilisé ultérieurement dans un mode pneumatique (la charge ajoutée par le/les cylindres en mode compresseur amène la/les charges du/des cylindres thermiques à l'optimal pour un rendement thermique maximal). Inversement, il est possible d'optimiser le rendement global du moteur en « déchargeant » un moteur dans des conditions de charge initialement trop forte pour être optimale (charge trop forte pour utiliser un cylindre de moins en mode thermique par rapport au nombre de cylindres en mode thermique nécessaires pour satisfaire la charge initiale) avec une activité pneumatique (mode pneumatique pour au moins un cylindre pour compléter le travail du/des cylindres en mode thermique qui sont à charge optimale).

Il est ainsi possible de faire fonctionner certains cylindres selon des cycles thermodynamiques de meilleurs rendements (ils sont mis sous une charge optimale). Ceci est obtenu par répartition dans l'espace (entre les cylindres) et le temps (d'un cycle à l'autre) de la charge globale à fournir de telle manière que chaque cylindre dans un mode thermique soit soumis à une charge optimale permettant de le faire fonctionner à son rendement maximal. On voit qu'il est donc possible de répartir la charge à fournir sur plusieurs cycles. Ainsi le moteur peut avoir des modalités de fonctionnement en parallèle et/ou série. Par exemple, un fonctionnement série pur correspond au cas où, à un moment donné, tous les cylindres sont dans le même mode et changent de mode au cours du temps d'une manière synchrone (au décalage des pistons sur le vilebrequin près). Un fonctionnement parallèle correspond au cas où, au même moment (au décalage des pistons près), une partie des cylindres est dans un premier mode de fonctionnement et l'autre partie dans un autre mode. Il est également possible de combiner les fonctionnements parallèles et série.

La répartition de la charge a lieu sur un horizon de h cycles de mode thermique moteur successifs, h n'étant pas nécessairement identique au nombre n de cylindres du moteur. La limite haute de cet horizon h peut être liée au ressenti de l'utilisateur et notamment la sensation d'à-coups. De façon à augmenter le rendement, sur cet horizon, on augmente (ou diminue) la charge des cylindres en mode thermique pour les amener à la charge optimale tout en permettant la production de la charge moyenne demandée au moteur. A cette fin, on réduit le nombre de cylindres en mode thermique et ajoute une charge par mode compresseur dans d'autres cylindres ou on les décharge par mode pneumatique dans d'autres cylindres pour se rapprocher de la charge globale à fournir.

Un moteur hybride fonctionnant selon ces modalités est globalement plus économe en consommation de carburant pour la production de couple.

Ainsi, l'invention concerne un procédé de fonctionnement d'un moteur hybride thermique-pneumatique d'un véhicule notamment automobile, le moteur comportant un ensemble de cylindres avec chambres de combustion et dans lesquels peuvent se déplacer des pistons, des soupapes contrôlant des accès à la chambre de combustion, au moins un réservoir pour du gaz comprimé étant relié aux cylindres par l'intermédiaire de soupapes, chaque cylindre pouvant fonctionner dans un mode particulier choisi parmi au moins les modes suivants :
- mode moteur thermique avec effet moteur par combustion dans la chambre de combustion d'un mélange carburant-comburant comprimé lors d'un temps de compression d'un cycle dudit mode,
- mode moteur pneumatique avec effet moteur par actionnement du piston par du gaz comprimé,
- mode pompe pneumatique destiné à produire du gaz comprimé,
- mode ressort pneumatique assurant un débrayage virtuel du cylindre, chaque mode étant caractérisé par un cycle fait de temps, un calculateur (ou plusieurs) embarqué permettant de sélectionner le mode de fonctionnement de chaque cylindre en fonction de paramètres notamment représentatifs de conditions de conduite et assurant notamment la coordination des actions des soupapes en fonction du mode et de la position du piston dans le cylindre.

Selon l'invention, le calculateur détermine la charge courante que doit produire le moteur et lorsqu'un mode thermique doit être mis en oeuvre pour parvenir à produire ladite charge, le calculateur réparti la charge courante entre les cylindres et au cours du temps de manière à ce que chaque cylindre en mode thermique, à chacun de ses cycles, soit sensiblement à sa charge optimale, la charge optimale pour un cylindre en mode thermique étant la charge qui donne le rendement maximal du cylindre, et pour que la charge moyenne produite dans ces conditions soit sensiblement égale à la charge courante.

Dans divers modes de mise en oeuvre de l'invention, les moyens suivants pouvant être utilisés seuls ou selon toutes les combinaisons techniquement possibles, sont employés :
- d'une part le calculateur détermine en fonction des paramètres si le mode compresseur peut être utilisé ou si le mode pneumatique peut être utilisé ou si aucun des deux ne doit être utilisé, et d'autre part, le calculateur détermine la charge courante que doit produire le moteur et lorsqu'un mode thermique doit être mis en oeuvre pour parvenir à produire ladite charge : le calculateur détermine au moins une configuration de fonctionnement comportant pour chaque mode de fonctionnement, le nombre de cylindre et le nombre de cycle dudit mode, le nombre de cycle(s) du mode thermique donnant un horizon h de la configuration de fonctionnement, ladite/lesdites configuration(s) étant déterminées par calcul du nombre de cylindre(s) et de cycle(s) qu'il y aurait à faire fonctionner et exécuter dans le mode thermique en supposant que chaque cylindre en mode thermique soit à sa charge optimale et pour produire une charge moyenne sensiblement égale à la charge courante, la charge optimale pour un cylindre en mode thermique étant la charge qui donne le rendement maximal du cylindre, les éventuels cylindres qui ne sont pas en mode thermique lors du/des cycle(s) correspondants pour calculer ce résultat étant alors considérés comme étant en mode ressort pneumatique ou, si le calculateur a déterminé que ce mode peut être utilisé, soit en mode compresseur, soit en mode pneumatique, (dans cette modalité générale, le calculateur suppose des modes de fonctionnement en série et en parallèle, c'est à dire qu'à un moment donné les modes peuvent être différents d'un cylindre à l'autre à l'approximation près du décalage des pistons sur le vilebrequin et que les modes (les cycles) se suivent à l'identique ou sont différents pour un cylindre donné au cours du temps sur l'horizon)
- le gaz comprimé est de l'air comprimé,
- le gaz comprimé comporte du gaz de combustion,
- le moteur est un moteur à deux temps,
- le moteur est un moteur à quatre temps,
- le moteur est un moteur à allumage commandé,
- le moteur est un moteur à allumage par compression,
- le moteur est suralimenté,
- le moteur est un moteur rotatif, (les pistons peuvent être virtuels et c'est la structure rotor/stator qui assure la commutation)
- le calculateur détermine en outre une/des configurations de fonctionnement en supposant seulement des modes en série, (mode série pur : à un moment donné l'ensemble des cylindres est dans un même mode à l'approximation près du décalage des pistons sur le vilebrequin et les modes (leurs cycles) se suivent au cours du temps sur un horizon)
- le moteur et le calculateur utilisent seulement des modes en série, à un moment donné l'ensemble des cylindres étant dans un même mode de fonctionnement, (à l'approximation près du décalage des pistons sur le vilebrequin)
- le moteur est à injection directe de carburant dans la chambre de combustion, (sous le contrôle du calculateur pour le moment et la durée de l'injection)
- le moteur est à injection directe de carburant dans la chambre de combustion et chaque cylindre peut en outre fonctionner dans un mode thermique sous-alimenté dans lequel pendant une partie du temps de compression, une partie du gaz du cylindre est envoyé hors du cylindre, ou fonctionner dans un mode thermique suralimenté dans lequel on injecte du gaz comprimé pendant une partie du temps de compression, et le calculateur détermine en outre en fonction des paramètres si le mode thermique suralimenté peut être utilisé ou si le mode thermique sous-alimenté peut être utilisé ou si aucun des deux ne doit être utilisé, et dans le cas où ils peuvent être utilisés, le calculateur détermine au moins une configuration de fonctionnement avec le mode correspondant,
- pour la détermination de la configuration de fonctionnement, le mode thermique suralimenté et le mode thermique sous-alimenté sont prioritaires sur respectivement le mode pneumatique et le mode compresseur,
- lorsque le calculateur détermine au moins deux configurations de fonctionnement, la configuration ayant l'horizon h le plus faible est mise en oeuvre pour produire la charge,
- l'un des paramètres est la dérivée de la charge courante, (si la charge évolue rapidement alors un mode particulier peut être mis en oeuvre : si elle diminue alors le mode compresseur devient prioritaire, si elle augmente alors le mode thermique ou thermique suralimenté est mis en oeuvre)
- on met en oeuvre des modes compresseur et (moteur) pneumatique ayant un cycle sur quatre temps,
- on met en oeuvre un moteur hybride qui comporte trois soupapes, une pour admission (pour le comburant ou le mélange comburant+carburant), une pour échappement (pour élimination notamment des gaz de combustion) et une pour charge (notamment pour l'envoi du gaz comprimé),
- on met en oeuvre un réservoir de gaz comprimé qui comporte un échangeur de chaleur,
- l'échangeur de chaleur permet de chauffer le gaz comprimé,
- l'échangeur de chaleur permet de refroidir le gaz comprimé,
- le gaz comprimé est chauffé par les gaz d'échappement.

L'invention concerne également un procédé de fonctionnement d'un moteur hybride thermique-pneumatique d'un véhicule notamment automobile, le moteur comportant un ensemble de cylindres avec chambres de combustion et dans lesquels peuvent se déplacer des pistons, des soupapes contrôlant des accès à la chambre de combustion, au moins un réservoir pour du gaz comprimé étant relié aux cylindres par l'intermédiaire de soupapes,
chaque cylindre pouvant fonctionner dans un mode particulier choisi parmi au moins les modes suivants :
- mode thermique avec effet moteur par combustion dans la chambre de combustion d'un mélange carburant-comburant comprimé lors d'un temps de compression d'un cycle dudit mode,
- mode pneumatique avec effet moteur par actionnement du piston par du gaz comprimé,
- mode compresseur destiné à produire du gaz comprimé,
- mode ressort pneumatique assurant un débrayage virtuel du cylindre, chaque mode étant caractérisé par un cycle fait de temps,
un calculateur (ou plusieurs) embarqué permettant de sélectionner le mode de fonctionnement de chaque cylindre en fonction de paramètres notamment représentatif de condition de conduite et assurant notamment la coordination des actions des soupapes en fonction du mode et de la position du piston dans le cylindre,
dans lequel, préalablement, en faisant évoluer des paramètres représentatifs de conditions de conduite du véhicule, par simulation ou essais,
d'une part un moyen de calcul détermine en fonction des paramètres si le mode compresseur peut être utilisé ou si le mode pneumatique peut être utilisé ou si aucun des deux ne doit être utilisé, et
d'autre part, le moyen de calcul détermine la charge courante que doit produire le moteur et lorsqu'un mode thermique doit être mis en oeuvre pour parvenir à produire ladite charge : le moyen de calcul détermine au moins une configuration de fonctionnement comportant pour chaque mode de fonctionnement, le nombre de cylindre et le nombre de cycle dudit mode, le nombre de cycle(s) du mode thermique donnant un horizon h de la configuration de fonctionnement, ladite/lesdites configurations étant déterminées par calcul du nombre de cylindre(s) et de cycle(s) qu'il y aurait à faire fonctionner et exécuter dans le mode thermique en supposant que chaque cylindre en mode thermique soit à sa charge optimale et pour produire une charge moyenne sensiblement égale à la charge courante, la charge optimale pour un cylindre en mode thermique étant la charge qui donne le rendement maximal du cylindre, les éventuels cylindres qui ne sont pas en mode thermique lors du/des cycles correspondants pour calculer ce résultat étant alors considérés comme étant en mode ressort pneumatique ou, si le moyen de calcul a déterminé que ce mode peut être utilisé, soit en mode compresseur, soit en mode pneumatique, et
on stocke en mémoire du calculateur du véhicule lesdites configurations avec les conditions de conduite correspondantes (en pratique sous forme de paramètres), et en ce que lors de l'utilisation ultérieure du véhicule, le calculateur dudit véhicule détermine la configuration de fonctionnement à utiliser par recherche dans la mémoire d'une correspondance avec des conditions de conduite courante (en pratique les paramètres courants).

Dans une variante de l'établissement préalable des configurations de fonctionnement, une sélection d'une configuration par conditions de conduite courante peut être effectuée, par exemple en ne gardant que celle qui a l'horizon le plus faible.

L'invention concerne également un moteur hybride thermique-pneumatique d'un véhicule notamment automobile, qui est spécialement configuré et comporte des moyens pour fonctionner selon l'une ou plusieurs des modalités décrites.

Dans le cadre de l'invention, on peut mettre en oeuvre un bloc moteur d'un type classique et alors les moyens permettant le fonctionnement des modes autres que thermique sont disposés en dehors du bloc moteur proprement dit et par exemple sur le circuit aval d'échappement et/ou le circuit amont d'admission. De même, on peut mettre un bloc moteur d'un type adapté à tous les modes prévus et qui comporte donc par exemple une soupape supplémentaire de charge. Dans d'autres variantes, le bloc moteur est partiellement adapté, et les moyens permettant le fonctionnement selon tous les modes sont partagés entre le bloc moteur et les circuits aval d'échappement et/ou amont d'admission. On comprend donc que le terme soupape doit être compris comme générique c'est-à-dire couvrant aussi bien une soupape classique intégrée au bloc moteur qu'une soupape externe au bloc moteur (vanne commandée externe).

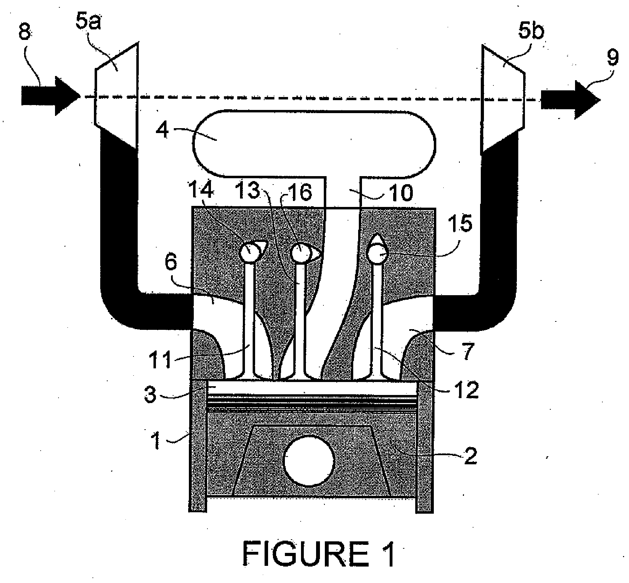

La présente invention, sans qu'elle en soit pour autant limitée, va maintenant être exemplifiée avec la description qui suit de modes de réalisation en relation avec la Figure 1 qui représente schématiquement un système moteur hybride thermique-pneumatique selon l'invention.

Le moteur hybride thermique-pneumatique de l'invention comporte plusieurs cylindres avec pistons associés, soupapes ainsi qu'au moins un réservoir de stockage de gaz comprimé.

Afin de faciliter la compréhension, on va maintenant donner des définitions de certains des termes utilisés dans la présente demande. Ces termes sont plus particulièrement ceux en relation avec les différentes phases ou états des éléments du moteur. Etant donné que ces phases ou états sont liés entre eux entre les différents cylindres du fait de l'interdépendance des pistons sur le vilebrequin (de même pour les soupapes dont les mouvements sont synchronisés aux états/mouvement des pistons), les phases ou états seront donnés sous forme de « temps » en relation avec la position ou le mouvement du piston pour permettre des comparaisons entre les différents modes possibles de fonctionnement du moteur.

Un cycle moteur correspond à la période minimale de fonctionnement comportant un temps moteur. Pour un moteur en mode thermique à quatre temps, un cycle comporte quatre temps : admission (descente du piston augmentant le volume de la chambre), compression (remontée du piston réduisant le volume de la chambre), combustion (descente du piston poussé par les gaz de combustion, temps moteur) et échappement (remontée du piston). Pour un moteur en mode pneumatique, un cycle comporte deux temps : action (temps moteur : action du gaz comprimé sur le piston provoquant sa descente), vidange/échappement (remontée du piston). Par extension on applique également la notion de cycle à des modes de fonctionnement sans temps moteur. Ainsi, pour un moteur pouvant fonctionner en mode compresseur (pour comprimer du gaz dans les cylindres et production de gaz comprimé), un cycle comporte deux temps : aspiration (descente du piston), compression (remontée du piston). De même, pour un moteur pouvant fonctionner en mode ressort pneumatique dans lequel la chambre de combustion reste fermée tout au long du cycle on a deux temps : expansion (descente du piston), compression (remontée du piston). A noter que les modes compresseur et (moteur) pneumatique peuvent également être mis en oeuvre avec un cycle sur quatre temps, ce qui simplifie la mise en oeuvre de l'invention.

Chaque cylindre peut fonctionner dans un mode particulier choisi parmi les modes suivants : mode thermique (effet moteur avec combustion du mélange), mode pneumatique (effet moteur par actionnement du piston par du gaz comprimé), mode compresseur (pour comprimer du gaz), mode ressort pneumatique (chambre fermée pendant le cycle), mode thermique sous-alimenté (pendant le temps de compression, une partie du gaz du cylindre est envoyé hors du cylindre, de préférence vers un réservoir de gaz comprimé), mode thermique suralimenté (injection de gaz comprimé pendant le temps de compression). Ces deux derniers modes sont décrits en détail dans la demande FR 2 865 769 et les explications qui en sont données ici sont donc succinctes et on pourra se reporter à ce document si nécessaire. A noter que pour le mode thermique sous-alimenté, il est préférable de mettre en oeuvre un moteur à injection directe de carburant dans la chambre de combustion afin d'éviter que le gaz qui quitte le cylindre pendant une partie de la compression ne soit déjà un mélange et donc que du carburant ne quitte le cylindre et, en conséquence, l'injection de carburant se fait après la sortie de la partie du gaz du cylindre et donc vers la fin de la compression. Le mode ressort pneumatique permet en quelque sorte de débrayer un cylindre en laissant toutes ses soupapes fermées pendant un cycle de ce mode. Dans ces conditions, le couple produit, aux frottements près, est nul. A noter que le mode compresseur peut permettre un freinage pneumatique du véhicule car c'est un mode qui absorbe de l'énergie pour la production de gaz comprimé.

On peut signaler que le moteur hybride thermique pneumatique peut comporter dans les modes thermiques une phase de balayage des gaz brûlés qui consiste à envoyer dans le cylindre, pendant une durée déterminé au temps d'échappement, du gaz comprimé (de préférence de l'air comprimé) afin de « nettoyer » le mieux possible le cylindre des gaz brûlés (voir imbrûlés). Ainsi, au début d'un cycle thermique suivant, la composition initiale en gaz de la chambre sera mieux déterminée.

Le moteur hybride comporte au moins une soupape d'admission, une soupape d'échappement, une soupape de charge. La soupape d'admission est destinée à l'introduction du comburant sous forme d'air atmosphérique à pression sensiblement atmosphérique (moteur non turbocompressé) ou à pression plus élevée (moteur turbocompressé). Dans le cas où le moteur ne comporte pas d'injecteur de carburant, la soupape d'admission sert également à l'introduction du carburant sous forme d'un mélange carburant-comburant. Ce dernier cas rend toutefois la gestion du moteur hybride plus complexe dans le cas du mode compresseur car il ne faut pas qu'il y ait du carburant dans le gaz à comprimer et il est alors nécessaire, soit de prévoir une voie spécifique d'introduction du gaz à comprimer (soit par une soupape spécifique, soit par la soupape de charge avec montage aspiration d'air atmosphérique et refoulement d'air comprimé vers le réservoir), soit avec un moyen pour couper en amont l'envoi du carburant afin de n'envoyer que de l'air atmosphérique par la soupape d'admission. A titre d'exemple, la soupape de charge avec montage aspiration d'air atmosphérique et refoulement d'air comprimé vers le réservoir comporte au-delà de la soupape de charge une conduite d'envoi de l'air comprimé produit dans le cylindre vers une entrée du réservoir (qui comporte également une valve anti-retour) et sur laquelle conduite est branchée en dérivation une prise d'air atmosphérique par l'intermédiaire d'une valve anti-retour qui fait que lors de l'aspiration de l'air par le cylindre en mode compresseur (soupape de charge ouverte), l'air provient de l'atmosphère par l'intermédiaire de la valve anti-retour qui est ouverte à l'atmosphère, et lors de la compression, l'air comprimé passe seulement vers le réservoir, ladite valve anti-retour étant fermée.

On comprend que le nombre de soupapes dépend de la structure des circuits fluidiques (gaz et carburant) mis en oeuvre afin d'obtenir touts les modes opératoires du moteur. Le moteur hybride comporte donc au moins trois soupapes, une pour admission, une pour échappement et une pour charge. Comme on l'a vu, une soupape supplémentaire peut être prévue pour un circuit de compresseur et/ou pour une entrée spécifique d'air atmosphérique pour mode compresseur (notamment au cas où le mélange est envoyé par la soupape d'admission qui ne peut donc pas être utilisée pour l'entrée du seul air atmosphérique). Encore une fois, une injection directe du carburant dans la chambre de combustion simplifie la réalisation du moteur hybride.

Le moteur hybride de l'invention peut donc fonctionner selon des modes différents en parallèles ou en série entre ses différents cylindres au cours du temps. Le terme parallèle concerne le fait qu'à un moment donné un premier cylindre est dans un premier mode, un second cylindre dans un second mode différent du premier, etc. plusieurs cylindres pouvant être dans un même mode ou, encore, tous les cylindres dans des modes différents, toutes les combinaisons de modes en parallèles étant considérées en fonction de leur intérêt et possibilité à un moment donné. En particulier, il n'apparaît pas spécialement intéressant d'avoir en même temps un cylindre en mode compresseur et un cylindre en mode pneumatique. Par contre lorsque certaines conditions sont réunies (par exemple pas de charge forte moteur) il peut être intéressant d'avoir à la fois le mode thermique et le mode compresseur. La possibilité s'entend par le fait que, par exemple, le mode pneumatique ou thermique suralimenté ne peut être efficace que si le réservoir de gaz comprimé comporte une réserve (en pratique une pression) suffisante.

Le terme série concerne le fait que pour un même cylindre, le mode change d'un cycle au suivant. Etant donné que le nombre de temps d'un cycle peut être différent entre les différents modes (quatre temps pour les modes thermiques et deux temps pour les autres), le changement de mode entre différents cylindres n'est pas forcément synchrone (au décalage près des pistons sur le vilebrequin).

On a représenté sur la figure 1 un cylindre 1 et un piston 2 définissant une chambre de combustion 3 d'un moteur hybride thermique-pneumatique selon l'invention et qui comporte trois soupapes par cylindre. Le moteur comporte plusieurs cylindres 1 identiques mais pour des raisons de simplification des explications, un seul cylindre est représenté. De préférence, ce moteur hybride est à allumage commandé (type bougie) lorsqu'il est dans le mode thermique mais, dans d'autres modalités de mise en oeuvre, ce peut être un moteur diesel. Dans cet exemple le moteur hybride thermique pneumatique est du type turbocompressé mais on comprend que l'invention peut s'appliquer à un moteur hybride non turbocompressé.

Comme cela est classique, le moteur comprend également un conduit d'admission 6 relié à la chambre de combustion 3 et muni d'une soupape 11, dite soupape d'admission, commandée par un moyen de commande 14, pour régler l'admission du mélange combustible 8 dans la chambre de combustion.

Ce moteur comprend aussi, de manière classique, un conduit d'échappement 7 reliée à la chambre de combustion 3 et muni d'une soupape 12, dite soupape d'échappement, commandée par un moyen de commande 15, pour régler l'échappement des gaz brûlés 9 de la chambre de combustion 3.

Comme cela est également classique pour les moteurs turbocompressés, le moteur comprend un turbocompresseur 5 comprenant un compresseur 5a destiné à comprimer le mélange combustible 8 admis dans la chambre de combustion 3 au moyen de la conduite d'admission 6 et une turbine 5b actionnée par les gaz d'échappement 9 et relié au compresseur 5 de manière à entraîner le compresseur 5a en rotation.

Le moteur comprend en outre, un réservoir 4 d'un gaz sous pression, tel que de l'air, relié par une conduite 10 à la chambre de combustion 3 et comportant une soupape 13, dite soupape de charge, pour le réglage de l'admission de gaz sous pression supplémentaire, commandée par un moyen de commande 16 dans la chambre de combustion 3. Bien entendu, le réservoir 4 est relié à l'ensemble des chambres de combustion par l'intermédiaire de soupapes correspondantes.

Chacune desdites soupapes 11, 12, 13 peut-être commandée par un moyen mécanique, électrique, magnétique, pneumatique, hydraulique ou par un moyen employant la combinaison d'au moins deux des moyens précités, ceci sous la dépendance d'un calculateur embarqué qui détermine le moment et la durée d'ouverture, si nécessaire, de chaque soupape, en fonction du mode courant de fonctionnement du cylindre et de la position du piston (ou du vilebrequin).

Le mode thermique de fonctionnement du moteur hybride est à quatre temps et est le suivant :
Pendant le temps d'admission, la soupape d'admission 11 s'ouvre, toutes les autres soupapes 12, 13 étant fermées et le piston 2 se déplaçant du point mort haut PMH au point mort bas PMB.

Pendant le temps de compression, toutes les soupapes 11, 12 et 13 sont fermées et le piston 2 se déplace du point mort bas PMB au point mort haut PMH. A noter que dans le mode thermique suralimenté la soupape de charge 13 s'ouvre pendant une partie du temps afin d'envoyer du gaz comprimé dans le cylindre (phase transitoire de compensation du couple : la quantité d'air supplémentaire comprimée à haute pression envoyé dans le cylindre permet de générer un travail du cycle thermodynamique plus élevé). Dans le mode thermique sous-alimenté la soupape de charge 13 s'ouvre également mais c'est pour extraire une partie du gaz présent dans le cylindre. Ce mode est préférentiellement utilisé pour le remplissage du réservoir de gaz comprimé comme on le verra également ci-après. A noter que dans le cas où un injecteur de carburant est mis en oeuvre, le carburant est de préférence introduit après la fermeture de la soupape pendant le temps de compression dans le mode thermique sous-alimenté.

Pendant le temps de détente, après allumage et combustion du mélange, toutes les soupapes 11, 12, 13 sont fermées, le piston 2 se déplace du point mort haut PMH au point mort bas PMB.

Pendant le temps d'échappement, la soupape d'échappement 12 s'ouvre, toutes les autres soupapes 11,13 étant fermées et le piston 2 se déplace du point mort bas PMB au point mort haut PMH.

Pour ce qui concerne le mode compresseur, il permet essentiellement le remplissage du réservoir dans certaines conditions (par exemple ralentissement du véhicule), lorsque la pression du réservoir 4 commence à baisser. Le moteur hybride thermique pneumatique est capable de produire un couple négatif, autrement dit peut consommer du couple de la transmission pendant une phase de freinage. L'énergie cinétique du véhicule est alors convertie en énergie potentielle sous forme de gaz comprimé envoyé dans le réservoir de gaz comprimé plutôt que dissipée en chaleur dans le système de freinage. On peut également produire du gaz comprimé en dehors d'un ralentissement ou freinage si nécessaire.

Le cycle en mode compresseur (ou pompe pneumatique, ces termes étant équivalents) du moteur comporte essentiellement deux temps : admission, compression avec remplissage du réservoir. Lors de l'admission le piston descend et la soupape d'admission 11 est ouverte de manière à permettre l'admission d'air frais dans le cylindre 1 puis ladite soupape d'admission 1 est fermée après l'admission de la quantité maximale d'air frais. Lors de la compression le piston remonte et la masse d'air est comprimée, toutes les soupapes 11, 12, 13 étant initialement fermée puis lors du remplissage du réservoir 4 d'air comprimé la soupape de charge 13 s'ouvre à la fin de la phase de compression afin de permettre l'injection de l'air comprimé dans ledit réservoir d'air comprimé, toutes les autres soupapes 11, 12 étant toujours fermées. A noter qu'une phase de détente ultérieure peut être considérée après fermeture de la soupape de charge 13 car l'air comprimé restant dans le cylindre qui n'a pu être envoyé dans le réservoir d'air comprimé se détend. Cependant la suite des événements lors de la descente du piston dépend du mode suivant choisi (nouveau cycle de mode compresseur par exemple).

L'énergie récupérée pendant un freinage est ordinairement insuffisante pour fournir un remplissage complet du réservoir 4 d'air comprimé et il n'est généralement pas possible d'obtenir un état de charge du réservoir sous haute pression à la fin d'un cycle routier en comptant seulement sur les moments de freinage ou ralentissement. Aussi, pour bénéficier pleinement du moteur hybride pneumatique-thermique selon l'invention, le mode thermique sous-alimenté déjà décrit peut être également utilisé pour le remplissage du réservoir 4 d'air comprimé. Enfin, si cela est nécessaire il est possible en modes parallèles de faire fonctionner une partie des cylindres en mode thermique et l'autre en mode compresseur pour un remplissage plus rapide du réservoir d'air comprimé.

A noter que dans une variante, le réservoir de gaz comprimé peut comporter un échangeur de chaleur permettant de chauffer le gaz comprimé qui va ainsi pouvoir produire plus de travail dans le cylindre dans le mode pneumatique. Le chauffage peut être obtenu par utilisation des gaz de combustion d'échappement. On utilise le terme générique de gaz comprimé et, de préférence, cela correspond à de l'air comprimé (utilisable en mode balayage ou en mode thermique suralimenté pour éviter de trop modifier le mélange carburant-comburant avec des gaz brûlés). L'utilisation des gaz de combustion pour produire le gaz comprimé (seuls ou combinés à de l'air comprimé) est toutefois envisagée dans le cadre de l'invention.

On va maintenant donner quelques exemples de configurations de modes fonctionnement (également appelées stratégies de fonctionnement) en fonction des charges demandées à un moteur hybride thermique-pneumatique à quatre cylindres.

Soit à réaliser un tiers de la charge optimale (celle donnant le rendement maximum) sur le moteur à quatre cylindres. Plusieurs solutions sont possibles :
1-a : Définir un horizon de trois cycles thermodynamiques, avec un cycle thermodynamique à charge optimale (mode thermique) et deux cycles thermodynamiques à charge nulle (mode ressort pneumatique). On a donc une charge moteur moyenne égale à (1*3/3 + 2*0/3)/3, soit 1/3. Le cycle en mode thermique à charge optimale peut être indifféremment positionné dans l'horizon et changé ou non de position à chaque horizon. Par rapport à la manière traditionnelle de réaliser une charge partielle, un meilleur rendement est obtenu grâce, d'une part, au cylindre opérant à charge optimale offrant ainsi un meilleur rendement qu'à 1/3 de charge et, d'autre part, aux des deux autres cylindres opérant à charge nulle et ne présentant que les pertes par frottements de toute façon également présentes dans la solution traditionnelle.
1-b : Plutôt que débrayer des cylindres (mode ressort pneumatique), on peut s'en servir pour comprimer de l'air qui sera stocké dans le réservoir (mode compresseur). Pour l'exemple on considérera que l'état thermodynamique du réservoir est tel que le mode pompe nécessite un couple égal au 2/3 de la charge optimale. Du point de vue de la charge moyenne moteur, ce mode intervient à hauteur de -2/3 de la charge optimale. Ainsi pour notre exemple (réaliser 1/3 de la charge optimale sur un moteur à quatre cylindres) on peut définir un horizon de cinq cycles thermodynamiques avec trois cycles thermodynamiques à charge optimale (mode thermique) et deux cycles thermodynamiques en mode compresseur. On a donc une charge moteur moyenne égale à (3*3/3 - 2*2/3)/5, soit 1/3. Les cycles à charge optimale peuvent être indifféremment positionnés dans l'horizon et changés ou non de position à chaque horizon. Par rapport à la manière traditionnelle de réaliser une charge partielle, un meilleur rendement est obtenu grâce, d'une part, aux cylindres opérant à charge optimale offrant ainsi un meilleur rendement qu'à 1/3 de charge et, d'autre part, aux deux autres cylindres opérant en mode compresseur permettant ainsi de stocker de l'énergie sous forme de gaz comprimé qui sera utilisable ultérieurement.
1-c : On peut aussi compléter la charge réalisée en mode thermique par un mode pneumatique afin de réaliser la charge moyenne moteur attendue. Ainsi sur un horizon de quatre cycles thermodynamiques, on met en oeuvre un cycle thermodynamique en mode thermique à charge optimale, deux cycles thermodynamiques en mode ressort pneumatique et un cycle en mode moteur pneumatique à charge partielle contrôlée de 1/3 de la charge maximum. On a donc une charge moteur moyenne égale à (3/3 + 2*0/3 + 1/3)/4, soit 1/3. Les cycles : mode thermique à charge optimale, mode pneumatique et mode ressort pneumatique, peuvent être indifféremment positionnés dans l'horizon et changés ou non de position à chaque horizon. Par rapport à la manière traditionnelle de réaliser une charge partielle, un meilleur rendement est obtenu grâce, premièrement, au cylindre opérant à charge optimale offrant ainsi un meilleur rendement qu'à 1/3 de charge, deuxièmement, aux deux autres cylindres opérant à charge nulle et ne présentant que les pertes par frottements de toute façon également présentes dans la solution traditionnelle et, troisièmement, au cylindre opérant en mode pneumatique utilisant l'énergie précédemment stockée dans le réservoir de gaz comprimé.
1-d : De façon similaire à la stratégie 1-a, on peut réaliser la charge moyenne moteur avec seulement un mode pneumatique. Le mode pneumatique, moteur, étant utilisé en lieu et place du mode thermique.

La stratégie 1-b est utilisable et profitable quand le réservoir de gaz comprimé est peu rempli, dans tous les cas non plein. La stratégie 1-c est utilisable et profitable quand le réservoir est plein ou fortement rempli. Ces deux stratégies ont vocation à être complémentaires.

Selon les conditions d'utilisation du véhicule (ou conditions de conduite) qui sont mesurées/déterminées par le calculateur (accélération, vitesse de croisière, freinage, arrêt... option/choix de conduite... la charge demandée, état du réservoir de gaz comprimé...) la mise en oeuvre successive de l'ensemble des stratégies/configurations possibles est effectuée dans le but de réduire la consommation. Le choix des stratégies et des modes associés ainsi que de l'horizon (le nombre de cycles considéré pour l'exécution de la stratégie permettant d'obtenir la charge moyenne à réaliser) et la répartition des modes dans l'horizon est sous la dépendance d'un calculateur embarqué qui a au moins le but de réduire la consommation en carburant.

On comprend donc qu'il est possible de définir plusieurs stratégies ou configurations de fonctionnement pour une même charge à fournir. Un calculateur embarqué déterminera pour chaque charge courante à fournir les différentes configurations possibles puis, en fonction de paramètres de sélection liés à des conditions de conduite, utilisera celle qui convient au moment donné. Par exemple, si un remplissage du réservoir de gaz comprimé est nécessaire et que le véhicule est en décélération, il mettra en oeuvre une configuration comportant un mode compresseur, si, par contre le véhicule était à allure et charge constante, il mettra en oeuvre une configuration comportant un mode thermique à sous-alimentation. De préférence, la configuration choisie est celle qui a l'horizon le plus court pour réduire le temps de réaction à des changements dans les paramètres de conduite.

Cette détermination de toutes les possibilités de configuration puis sélection ultérieure de celle à mettre en oeuvre peut être plus ou moins optimisée. La moins optimisée consiste à déterminer des configurations en considérant toutes les combinaisons possibles techniquement ou utilitairement (par exemple l'association du mode compresseur et pneumatique surtout s'il est parallèle ne présente pas un grand intérêt) de modes de fonctionnement sans essayer d'exclure certains modes de toute façon pas utilisable dans les conditions de conduite courantes. Une plus optimisée consiste à éliminer ou imposer à priori certains modes selon les conditions de conduite courante pour la détermination du/des configurations possibles, elle est moins lourde que la précédente.

Parmi les critères de détermination, le paramètre de taux (pression) de remplissage du réservoir d'air comprimé peut imposer certains choix. Par exemple lors du fonctionnement du moteur avec un mode thermique les moyens de contrôle permettent, lorsque des paramètres de conduite du véhicule sont vérifiés, le passage du moteur en un mode compresseur (en totalité ou partiel du moteur) pour remplissage du réservoir tant que sa pression est inférieure à une pression déterminée ou jusqu'à un changement d'autres paramètres. Parmi les conditions pouvant autoriser ce remplissage on peut citer : le démarrage du moteur et véhicule à l'arrêt, une charge constante du moteur, une charge décroissante du moteur, (relâchement de l'accélérateur ou véhicule dans une descente ou freinage).

On comprend que le fonctionnement du calculateur embarqué tel que décrit ci-dessus est indicatif. D'autres modalités de détermination de la stratégie/configuration à utiliser peuvent être utilisées. Par exemple au lieu de déterminer un ensemble de configurations possibles puis de déterminer celle à utiliser en fonction de paramètres, le calculateur peut d'abord déterminer les modes préférentiels à mettre en oeuvre en fonction des paramètres puis ensuite déterminer une (des) configuration(s) comportant seulement ces modes. En alternative, au lieu de déterminer en temps réel une/des configuration(s), le calculateur peut comporter une table de configuration prédéterminées en fonction de paramètres et puiser dans cette table la configuration à utiliser en fonction des paramètres courant de conduite. Ces différentes possibilités de détermination de la stratégie/configuration à mettre en oeuvre peuvent être combinées ou associées dans le calculateur, par exemple le calculateur pouvant passer d'une détermination à partir d'une table à une détermination en temps réel.

Le calculateur peut mettre en oeuvre des méthodes de détermination/sélection basées sur une logique booléenne et/ou une logique floue. Le calculateur peut, en fait, être constitué d'un ensemble de moyens de calcul répartis ou non dans le véhicule. Enfin, outre l'automatisation du fonctionnement du véhicule selon des configurations de fonctionnement dépendant des conditions (paramètres) de conduite, l'utilisateur du véhicule peut avoir accès à une sélection d'options, par exemple : modes préféré (pneumatique versus thermique), type de conduite (ville versus autoroute) qui seront alors considérés par le calculateur comme des paramètres de conduite et pris en compte pour la détermination de la configuration (courante et possiblement évolutive).

## Revendications

1. Procédé de fonctionnement d'un moteur hybride thermique-pneumatique d'un véhicule notamment automobile, le moteur comportant un ensemble de cylindres (1) avec chambres de combustion (3) et dans lesquels peuvent se déplacer des pistons (2), des soupapes (11, 12, 13) contrôlant des accès à la chambre de combustion, au moins un réservoir (4) pour du gaz comprimé étant relié aux cylindres par l'intermédiaire de soupapes,
chaque cylindre pouvant fonctionner dans un mode particulier choisi parmi au moins les modes suivants :
- mode thermique avec effet moteur par combustion dans la chambre de combustion d'un mélange carburant-comburant comprimé lors d'un temps de compression d'un cycle dudit mode,
- mode pneumatique avec effet moteur par actionnement du piston par du gaz comprimé,
- mode compresseur destiné à produire du gaz comprimé, **caractérisé en ce qu'**il peut fonctionner aussi dans un
- mode ressort pneumatique assurant un débrayage virtuel du cylindre, chaque mode étant **caractérisé par** un cycle fait de temps,
un calculateur embarqué permettant de sélectionner le mode de fonctionnement de chaque cylindre en fonction de paramètres notamment représentatifs de conditions de conduite et assurant notamment la coordination des actions des soupapes (11, 12, 13) en fonction du mode et de la position du piston (2) dans le cylindre,
le calculateur détermine la charge courante que doit produire le moteur et lorsqu'un mode thermique doit être mis en oeuvre pour parvenir à produire ladite charge, le calculateur répartit la charge courante entre les cylindres (1), et au cours du temps de manière à ce que chaque cylindre en mode thermique, à chacun de ses cycles, soit sensiblement à sa charge optimale, la charge optimale pour un cylindre en mode thermique étant la charge qui donne le rendement maximal du cylindre, et pour que la charge moyenne produite dans ces conditions soit sensiblement égale à la charge courante à produire.

2. Procédé de fonctionnement selon la revendication 1, **caractérisé en ce que** d'une part le calculateur détermine en fonction des paramètres si le mode compresseur peut être utilisé ou si le mode pneumatique peut être utilisé ou si aucun des deux ne doit être utilisé, et d'autre part, le calculateur détermine la charge courante que doit produire le moteur et lorsqu'un mode thermique doit être mis en oeuvre pour parvenir à produire ladite charge, le calculateur détermine au moins une configuration de fonctionnement comportant pour chaque mode de fonctionnement, le nombre de cylindre et le nombre de cycle dudit mode, le nombre de cycle(s) du mode thermique donnant un horizon h de la configuration de fonctionnement, ladite/lesdites configuration(s) étant déterminées par calcul du nombre de cylindre(s) (1) et de cycle(s) qu'il y aurait à faire fonctionner et exécuter dans le mode thermique en supposant que chaque cylindre (1) en mode thermique soit à sa charge optimale et pour produire une charge moyenne sensiblement égale à la charge courante, la charge optimale pour un cylindre en mode thermique étant la charge qui donne le rendement maximal du cylindre, les éventuels cylindres qui ne sont pas en mode thermique lors du/des cycle(s) correspondants pour calculer ce résultat étant alors considérés comme étant en mode ressort pneumatique ou, si le calculateur a déterminé que ce mode peut être utilisé, soit en mode compresseur, soit en mode pneumatique.

3. Procédé de fonctionnement selon la revendication 1 ou 2, **caractérisé en ce que** le moteur et le calculateur utilisent seulement des modes en série, à un moment donné l'ensemble des cylindres (1) étant dans un même mode de fonctionnement.

4. Procédé selon l'une quelconque des revendications précédentes, **caractérisé en ce que** le moteur est à injection directe de carburant dans la chambre de combustion et que chaque cylindre peut en outre fonctionner dans un mode thermique sous-alimenté dans lequel pendant une partie du temps de compression, une partie du gaz du cylindre est envoyé hors du cylindre, ou fonctionner dans un mode thermique suralimenté dans lequel on injecte du gaz comprimé pendant une partie du temps de compression, et **en ce que** le calculateur détermine en outre en fonction des paramètres si le mode thermique suralimenté peut être utilisé ou si le mode thermique sous-alimenté peut être utilisé ou si aucun des deux ne doit être utilisé, et dans le cas où ils peuvent être utilisés, le calculateur détermine au moins une configuration de fonctionnement avec le mode correspondant.

5. Procédé selon l'une quelconque des revendications précédentes, **caractérisé en ce que** lorsque le calculateur détermine au moins deux configurations de fonctionnement, la configuration ayant l'horizon h le plus faible est mise en oeuvre pour produire la charge.

6. Procédé selon l'une quelconque des revendications précédentes, **caractérisé en ce que** l'on met en oeuvre un réservoir de gaz comprimé (4) qui comporte un échangeur de chaleur permettant de chauffer ou de refroidir le gaz comprimé.

7. Procédé selon l'une quelconque des revendications précédentes, **caractérisé en ce que** l'on met en oeuvre des modes compresseur et pneumatique ayant un cycle sur quatre temps.

8. Procédé selon l'une quelconque des revendications précédentes, **caractérisé en ce que** l'on met en oeuvre un moteur hybride qui comporte trois soupapes (11, 12, 13), une pour admission, une pour échappement et une pour charge.

9. Procédé selon la revendication 1, **caractérisé en ce que** préalablement, en faisant évoluer des paramètres représentatifs de conditions de conduite du véhicule, par simulation ou essais,
d'une part un moyen de calcul détermine en fonction des paramètres si le mode compresseur peut être utilisé ou si le mode pneumatique peut être utilisé ou si aucun des deux ne doit être utilisé, et
d'autre part, le moyen de calcul détermine la charge courante que doit produire le moteur et lorsqu'un mode thermique doit être mis en oeuvre pour parvenir à produire ladite charge,
le moyen de calcul détermine au moins une configuration de fonctionnement comportant pour chaque mode de fonctionnement, le nombre de cylindre (1) et le nombre de cycle dudit mode, le nombre de cycle(s) du mode thermique donnant un horizon h de la configuration de fonctionnement, ladite/lesdites configurations étant déterminées par calcul du nombre de cylindre(s) et de cycle(s) qu'il y aurait à faire fonctionner et exécuter dans le mode thermique en supposant que chaque cylindre en mode thermique soit à sa charge optimale et pour produire une charge moyenne sensiblement égale à la charge courante, la charge optimale pour un cylindre en mode thermique étant la charge qui donne le rendement maximal du cylindre, les éventuels cylindres qui ne sont pas en mode thermique lors du/des cycles correspondants pour calculer ce résultat étant alors considérés comme étant en mode ressort pneumatique ou, si le moyen de calcul a déterminé que ce mode peut être utilisé, soit en mode compresseur, soit en mode pneumatique, et
**en ce que** l'on stocke en mémoire du calculateur du véhicule lesdites configurations avec les conditions de conduite correspondantes, et **en ce que** lors de l'utilisation ultérieure du véhicule, le calculateur dudit véhicule détermine la configuration de fonctionnement à utiliser par recherche dans la mémoire d'une correspondance avec des conditions de conduite courante.

10. Moteur hybride thermique-pneumatique d'un véhicule notamment automobile, **caractérisé en ce qu'**il est spécialement configuré et comporte des moyens pour fonctionner selon l'une quelconque des revendications précédentes.

## Patentansprüche

1. Verfahren zum Betreiben eines thermo-pneumatischen Hybridmotors eines Fahrzeugs, insbesondere eines Kraftfahrzeugs, wobei der Motor eine Gesamtheit von Zylindern (1) mit Brennräumen (3) aufweist und in denen sich Kolben (2) bewegen können, wobei Ventile (11, 12, 13) den Zugang zum Verbrennungsraum steuern, wobei wenigstens ein Tank (4) für komprimiertes Gas durch Ventile mit den Zylindern verbunden ist,
wobei jeder Zylinder in einer besonderen, unter den nachstehenden Betriebsarten ausgewählten Betriebsart funktionieren kann:
- thermische Betriebsart mit Motoreffekt durch Verbrennen eines Gemischs aus Kraftstoff und Verbrennungsluft, das während eines Kompressionszeitraums eines Zyklus dieser Weise komprimiert worden ist, im Verbrennungsraum,
- pneumatische Betriebsart mit Motoreffekt durch Betätigen des Kolbens durch komprimiertes Gas,
- Betriebsart Kompressor, die dazu bestimmt ist, komprimiertes Gas zu erzeugen,
**dadurch gekennzeichnet, daß** er auch
- in der Weise einer pneumatischen Feder funktionieren kann, die ein virtuelles Entkoppeln des Zylinders sicherstellt,
wobei jede Betriebsart durch einen Zeitzyklus charakterisiert ist, wobei ein eingebauter Rechner ermöglicht, die Betriebsart jedes Zylinders in Abhängigkeit von Parametern zu bestimmen, die insbesondere für Fahrbedingungen charakteristisch sind, und insbesondere die Koordinierung der Arbeit der Ventile (11, 12, 13) in Abhängigkeit von der Betriebsart und der Stellung des Kolbens (2) im Zylinder sicherstellt,
wobei der Rechner die laufende Leistung bestimmt, die der Motor erzeugen soll, und, wenn eine thermische Betriebsart ausgeführt werden soll, um zu schaffen, die Leistung zu erzeugen, der Rechner die laufende Leistung unter den Zylindern (1) und über die Zeit so verteilt, daß jeder Zylinder bei thermischer Betriebsart bei jedem seiner Zyklen im Wesentlichen mit optimaler Leistung betrieben wird, wobei die optimale Leistung für einen Zylinder bei thermischer Betriebsart die Leistung ist, die den maximalen Wirkungsgrad des Zylinders ergibt, und daß die unter diesen Bedingungen erzeugte mittlere Leistung im Wesentlichen gleich der zu erzeugenden laufenden Leistung ist.

2. Betriebsverfahren gemäß Anspruch 1, **dadurch gekennzeichnet, daß** der Rechner einerseits in Abhängigkeit von den Parametern bestimmt, ob die Betriebsart Kompressor ausgeführt werden kann oder ob die pneumatische Betriebsart ausgeführt werden kann oder ob keine der beiden ausgeführt werden soll, und der Rechner andererseits die laufende Leistung bestimmt, die der Motor erzeugen soll, und der Rechner, wenn eine thermische Betriebsart ausgeführt werden soll, um zu schaffen, die Leistung zu erzeugen, wenigstens eine Betriebseinstellung bestimmt, die für jede Betriebsart die Zahl der Zylinder und die Zahl der Zyklen der Betriebsart aufweist, wobei die Zahl der Zyklen der thermischen Betriebsart einen Horizont h der Betriebseinstellung ergibt, wobei die Einstellung (bzw. die Einstellungen) durch Berechnung der Zahl der Zylinder (1) und der Zyklen, die bei der thermischen Betriebsart zu betreiben bzw. auszuführen sind, bestimmt wird (werden), wobei angenommen wird, daß jeder Zylinder (1) bei thermischer Betriebsart bei seiner optimalen Leistung betrieben wird, und daß, um eine mittlere Leistung zu erzeugen, die im Wesentlichen gleich der laufenden Leistung ist, die optimale Leistung für einen Zylinder bei thermischer Betriebsart die Leistung ist, die den maximalen Wirkungsgrad des Zylinders ergibt, wobei die Zylinder, die eventuell im entsprechenden Zyklus bzw. in den entsprechenden Zyklen nicht in thermischer Betriebsart funktionieren, zur Berechnung des Ergebnisses als sich in der Betriebsart einer pneumatischen Feder befindlich, oder, wenn der Rechner bestimmt hat, daß diese Betriebsart ausgeführt werden kann, als in der Betriebsart eines Kompressors oder in der pneumatischen Betriebsart befindlich betrachtet werden.

3. Betriebsverfahren gemäß Anspruch 1 oder 2, **dadurch gekennzeichnet, daß** der Motor und der Rechner nur Serienbetriebsarten ausführen, wobei sich die Gesamtheit der Zylinder (1) zu einem gegebenen Zeitpunkt in der gleichen Betriebsart befindet.

4. Verfahren gemäß einem der vorangehenden Ansprüche, **dadurch gekennzeichnet, daß** der Motor mit Direkteinspritzung von Kraftstoff in den Verbrennungsraum funktioniert und daß jeder Zylinder außerdem in einer thermischen Betriebsart mit reduzierter Gasversorgung funktionieren kann, in der während eines Teils des Kompressionszeitraums ein Teil des Gases des Zylinders nach außerhalb des Zylinders geschickt wird, oder in einer thermischen Betriebsart mit Aufladung funktionieren kann, in der während eines Teils des Kompressionszeitraums ein komprimiertes Gas eingespritzt wird, und **dadurch gekennzeichnet, daß** der Rechner außerdem in Abhängigkeit von den Parametern bestimmt, ob die thermische Betriebsart mit Aufladung ausgeführt werden kann oder ob die thermische Betriebsart mit reduzierter Gasversorgung ausgeführt werden kann oder ob keine der beiden ausgeführt werden soll, und im Fall, daß sie beide ausgeführt werden können, bestimmt der Rechner wenigstens eine Betriebseinstellung mit der entsprechenden Betriebsart.

5. Verfahren gemäß einem der vorangehenden Ansprüche, **dadurch gekennzeichnet, daß**, wenn der Rechner wenigstens zwei Betriebseinstellungen bestimmt, die Einstellung mit dem geringsten Horizont h ausgeführt wird, um die Leistung zu erzeugen.

6. Verfahren gemäß einem der vorangehenden Ansprüche, **dadurch gekennzeichnet, daß** ein Tank (4) für komprimiertes Gas verwendet wird, der einen Wärmetauscher aufweist, der ermöglicht, das komprimierte Gas aufzuheizen oder zu kühlen.

7. Verfahren gemäß einem der vorangehenden Ansprüche, **dadurch gekennzeichnet, daß** die Betriebsart Kompressor und die pneumatische Betriebsart mit einem Viertaktzyklus ausgeführt werden.

8. Verfahren gemäß einem der vorangehenden Ansprüche, **dadurch gekennzeichnet, daß** ein Hybridmotor verwendet wird, der drei Ventile (11, 12, 13) aufweist : eins für den Einlaß, eins für den Auslaß und eins für die Leistung.

9. Verfahren gemäß Anspruch 1, **dadurch gekennzeichnet, daß** zuvor, indem die für Fahrbedingungen des Fahrzeugs repräsentativen Parameter durch Simulation oder Versuche weiterentwickelt werden, einerseits ein Rechenmittel in Abhängigkeit von den Parametern bestimmt, ob die Betriebsart Kompressor ausgeführt werden kann oder ob die pneumatische Betriebsart ausgeführt werden kann oder ob keine der beiden ausgeführt werden soll, und
andererseits das Rechenmittel die laufende Leistung bestimmt, die der Motor erzeugen soll, und bestimmt, wann die thermische Betriebsart ausgeführt werden soll, um zu schaffen, die besagte Leistung zu erzeugen;
daß das Rechenmittel wenigstens eine Betriebseinstellung bestimmt, die für jede Betriebsart die Zahl der Zylinder (1) und die Zahl der Zyklen der Betriebsart aufweist, wobei die Zahl der Zyklen der thermischen Betriebsart einen Horizont h der Betriebseinstellung ergibt, wobei die Einstellung (bzw. die Einstellungen) durch Berechnung der Zahl der Zylinder (1) und der Zyklen, die bei der thermischen Betriebsart zu betreiben bzw. auszuführen sind, bestimmt wird (werden), wobei angenommen wird, daß jeder Zylinder bei thermischer Betriebsart bei seiner optimalen Leistung betrieben wird, und daß, um eine mittlere Leistung zu erzeugen, die im Wesentlichen gleich der laufenden Leistung ist, die optimale Leistung für einen Zylinder bei der thermischen Betriebsart die Leistung ist, die den maximalen Wirkungsgrad des Zylinders ergibt, wobei die Zylinder, die eventuell im entsprechenden Zyklus bzw. in den entsprechenden Zyklen nicht in thermischer Betriebsart funktionieren, zur Berechnung des Ergebnisses als sich in der Betriebsart einer pneumatischen Feder befindlich, oder, wenn das Rechenmittel bestimmt hat, daß diese Betriebsart ausgeführt werden kann, als in der Betriebsart Kompressor oder in der pneumatischen Betriebsart befindlich betrachtet werden, und
daß die Betriebseinstellungen im Speicher des Rechners des Fahrzeugs mit den entsprechenden Fahrbedingungen gespeichert werden und daß der Rechner des Fahrzeugs bei einer späteren Benutzung des Fahrzeugs die auszuführende Betriebseinstellung durch eine Suche im Speicher nach einer Entsprechung mit den laufenden Fahrbedingungen bestimmt.

10. Thermo-pneumatischer Hybridmotor eines Fahrzeugs, insbesondere eines Kraftfahrzeugs, **dadurch gekennzeichnet, daß** er speziell dafür ausgelegt ist und die Mittel aufweist, um nach einem der vorangehenden Ansprüche zu funktionieren.

## Claims

1. An operating method of a hybrid heat-pneumatic engine of a vehicle, in particular a motor vehicle, the engine including a set of cylinders (1) with combustion chambers (3) and inside which pistons (2) can move, valves (11, 12, 13) controlling accesses to the combustion chamber, at least one tank (4) for compressed gas being connected to the cylinders through valves,
each cylinder being able to operate in a particular mode chosen among at least the following modes:
- heat mode, with motor effect by combustion in the combustion chamber of a fuel-combustible mixture compressed during a compression time of a cycle of said mode,
- pneumatic mode, with motor effect by actuation of the piston by compressed gas,
- compressor mode intended to produce compressed gas,
**characterized in that** it may also operate in a
- pneumatic spring mode ensuring a virtual disengagement of the cylinder,
each mode being **characterized by** a cycle consisted of times,
an on-board calculator allowing the selection of the operating mode of each cylinder as a function of parameters in particular representative of driving conditions and ensuring in particular the coordination of the valves (11, 12, 13) actions as a function of the mode and the position of the piston (2) in the cylinder,
the calculator determining the current load that the engine must produce and when a heat mode must be implemented in order to manage to produce said load, the calculator distributing the current load between the cylinders (1), and over time, so that each cylinder in heat mode, at each of its cycles, is substantially at its optimum load, the optimum load for a cylinder in heat mode being the load that gives the maximum cylinder performance, and so that the average load produced in these conditions is substantially equal to the current load to be produced.

2. The operating method according to claim 1, **characterized in that**, on the one hand, the calculator determines, as a function of the parameters, if the compressor mode can be used or if the pneumatic mode can be used or if none of both must be used, and on the other hand, the calculator determines the current load that the engine must produce and when a heat mode should be applied to produce said load, the calculator determines at least one operating configuration including, for each operating mode, the number of cylinders and the number of cycles of said mode, the number of cycles of the heat mode giving a horizon h of the operating configuration, said configuration(s) being determined by calculation of the number of cylinders (1) and of cycles it would be required to operate and execute in the heat mode, supposing that each cylinder (1) in heat mode is at its optimum load, and to produce an average load substantially equal to the current load, the optimum load for a cylinder in heat mode being the load that gives the maximum cylinder performance, the potential cylinders that are not in heat mode during the corresponding cycle(s) to calculate this result being then considered as being in pneumatic spring mode or, if the calculator has determined that this mode can be used, either in compressor mode, or in pneumatic mode.

3. The operating method according to claim 1 or 2, **characterized in that** the engine and the calculator use only serial modes, at a given time the set of cylinders (1) being in a same operating mode.

4. The method according to any one of the preceding claims, **characterized in that** the engine is of the type direct fuel injection into the combustion chamber and **in that** each cylinder can further operate in an underpowered heat mode in which, during a part of the compression time, a part of the gas of the cylinder is sent out of the cylinder, or in an overpowered heat mode in which compressed gas is injected during a part of the compression time, and **in that** the calculator further determines as a function of the parameters if the overpowered heat mode can be used or if the underpowered heat mode can be used or if none of both must be used, and in the case where they can be used, the calculator determines at least one operating configuration with the corresponding mode.

5. The method according to any one of the preceding claims, **characterized in that**, when the calculator determines at least two operating configurations, the configuration having the lowest horizon h is implemented to produce the load.

6. The method according to any one of the preceding claims, **characterized in that** a compressed gas tank (4) that includes a heat exchanger for heating or cooling the compressed gas is implemented.

7. The method according to any one of the preceding claims, **characterized in that** compressor and pneumatic modes having a four-time cycle are implemented.

8. The method according to any one of the preceding claims, **characterized in that** a hybrid engine that includes three valves (11, 12, 13), an intake one, an exhaust one and a load one, is implemented.

9. The method according to claim 1, **characterized in that**, previously, by varying parameters representative of driving conditions of the vehicle, by simulation or tests,
on the one hand, a calculation means determines as a function of the parameters if the compressor mode can be used or if the pneumatic mode can be used or if none of both must be used, and
on the other hand, the calculation means determines the current load that the engine must produce and when a heat mode must be implemented in order to manage to produce said load,
the calculation means determines at least one operating configuration including for each operating mode, the number of cylinders (1) and the number of cycles of said mode, the number of cycle(s) of the heat mode giving a horizon h of the operating configuration, said configuration(s) being determined by calculation of the number of cylinder(s) and of cycle(s) it would be required to operate and execute in the heat mode, supposing that each cylinder in heat mode is at its optimum load, and to produce an average load substantially equal to the current load, the optimum load for a cylinder in heat mode being the load that gives the maximum cylinder performance, the potential cylinders that are not in heat mode during the corresponding cycle(s) to calculate this result being then considered as being in pneumatic spring mode or, if the calculation means has determined that this mode can be used, either in compressor mode, or in pneumatic mode, and
**in that** said configurations are stored in the memory of the vehicle calculator with the corresponding driving conditions, and **in that**, during the later use of the vehicle, the calculator of said vehicle determines the operating configuration to be used by searching the memory for a correspondence with current driving conditions.

10. A hybrid heat-pneumatic engine of a vehicle, in particular a motor vehicle, **characterized in that** it is specially configured and includes means for operating according to any one of the preceding claims.
